# EUROPEAN PATENT APPLICATION

(11) **EP 2 747 350 A1**
(43) Date of publication of application: **25.06.2014**
(21) Application number: 12382526.7
(22) Date of filing: 21.12.2012
(51) Int. Cl.: H04L 12/46, H04L 12/28, H04L 29/08

(54) **Method and system for access to cloud network services**

(71) Applicant: Telefónica, S.A., 28013 Madrid (ES)
(72) Inventor: Aranda Gutiérrez, Pedro A., 28013 Madrid (ES); López da Silva, Rafaél Alejandro, 28013 Madrid (ES); Ramón Salguero, Fco. Javier, 28013 Madrid (ES)
(74) Representative: Carpintero Lopez, Francisco

(57) **Abstract**

A method and system for providing access to a service hosted in a cloud network to a subscriber of a home network. The proposed method and system provides an automatic and efficient OSI layer 2 connection to the cloud network. It is especially useful in virtualized home environments where the proposed solution solve the problems of prior art technologies.

## Description

### BACKGROUND OF THE INVENTION

### Technical field

The present invention relates to the improvement of the access of a subscriber to networks services and more specifically to a method and system for improving interconnection between a cloud infrastructure and the subscriber's access network.

### Description of related art

As global computer networks, such as the Internet, continue to grow globally at a rapid pace, an increasing number of people and businesses from around the world are accessing these networks for both business and personal activities. As a result, such networks have become a virtual community where people communicate with each other by sending and receiving electronic, voice and image messages for both business and pleasure.

The number of consumer devices for storing and rendering content and services has dramatically increased in the last years and is expected to continue to do so in the future. It is not unusual to find within a typical house a home network including multiple TV sets, set top boxes, DVD players, and multimedia mobile phones. These devices consume content from a wide range of sources such as broadcast networks, internet streaming servers, personal video recorders, local music library services, local photo archives, etc.

Most of these content and services are not locally accessible, so the network terminals have to access a cloud infrastructure where said contents or services are available. Cloud computing or cloud infrastructure is the use of computing resources (hardware and software) that are delivered as a service over a network (typically the Internet). In other words, it refers to services offered over a communication network (e.g. Internet), from data centers all over the world, which collectively are referred to as the "cloud." The idea of the "cloud" simplifies the many network connections and computer systems involved in online services. Any user subscribed to the services with an Internet connection can access the cloud and the services it provides. Since these services are often connected, users can share information between multiple systems and with other users. Examples of cloud computing includes online backup services, social networking services, audiovisual content distribution, personal data services... For example, a cloud services provider may make a service, platform or infrastructure from one or more data centers, available to one or more costumers over internet. Generally speaking, cloud services are services that are offered in a way the used infrastructure is transparent to the service user.

For resource efficiency reasons, the servers (which provide the services) can be virtualized. Virtualization is based on a virtual machine monitor software component, which runs on the server hardware and virtualizes physical hardware and virtualizes physical resources, thereby offering guest system an environment that looks like a physical host from the guest systems point of view. It allows running multiple operating systems and their applications on the same physical server, on top of the virtual machine monitor. Each operating system and its applications are said to be running within a virtual machine, VM. Common technologies used as virtual machine monitors are Xen and VMware. If VMs are to be run internal to a company/government body, the hardware resources running the VMs have to be provided internally. Otherwise, VMs can be run by third parties and accessed over a public network, e.g. the Internet. To manage VMs from distributed data centres, internal and external to a company/government body, hybrid cloud management tools can be used. The management functionalities include an authentication and authorization system, the ability to create, start, stop and delete VMs as well as to migrate VMs from one data centre to another.

Most typical network terminals (end devices) in a home network are unable to directly access the cloud infrastructure but they access the services of the cloud infrastructure through an access network and more specifically, via a main equipment called Customer premises equipment or CPE. The CPE is a device (telephone, router, switch, residential gateway, set-top box, home networking adaptor, fixed mobile convergence product, internet access gateway or any other device) located at a subscriber's premises and connected to the access network via a communication channel, which access the required services and distribute them to the home networks terminals via, for example, a Local Access Network. CPE can refer to both devices purchased by the subscriber and provided by the operator or service provider.

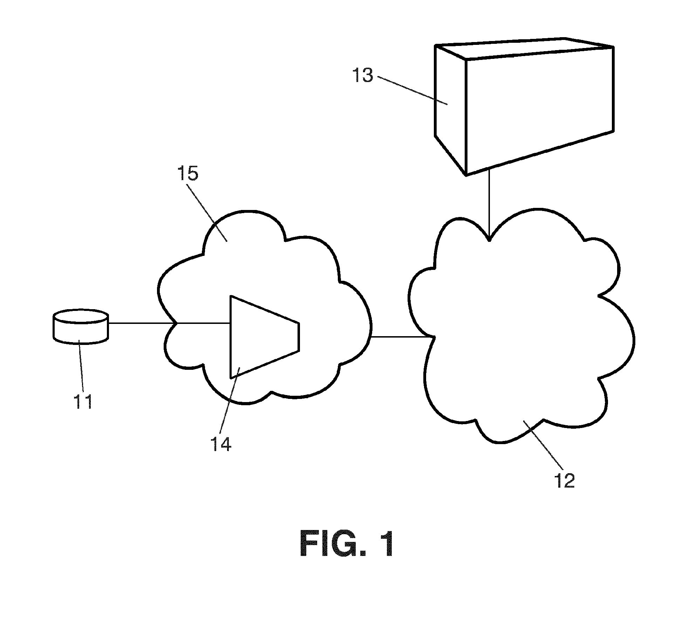

The access network and the cloud environment may be located in different network realms as shown in Figure 1.

As shown in figure 1, in prior systems, the CPE in the home network (11), accesses the cloud environment (data centers, 13) via internet, using an IP (i.e. Layer 3) connection. Actually, there is not a real isolated identifiable connection between the access network's subscriber and the cloud network but it is made as a normal Internet access.

To access the internet the CPE connects with an access server (14) (e.g. a Broadband Remote Access Server, BRAS) of the access network, said connection (16) is a Layer 3 connection. The access to the Internet is made using an IP address assigned by the BRAS. Usually, the region served by a service provider is divided in different area networks 11 (e.g. Metropolitan Area Networks), each area network is served by a Broadband Remote Access Server, BRAS. A BRAS is a router which serves the access network's subscribers in a area network.

That is, the BRAS acts as a layer 3 instance which manages the layer 3 connection between the home network (the CPE) and the internet.

Even in the case that the cloud environment is collocated with the access network, in current systems, the cloud network is still accessed through a access server using Layer 3 connectivity only.

However, there are some new technologies where the connection between the home network (the CPE) and the access network should be established using layer 2 connectivity. It happens for example, in virtualized home environments (also called virtualized home networks).

The Virtualized Home Environment can be defined as "an environment which provides the same interface and service environment regardless of location (personalized subscriber interface independent from the current serving network)" as defined by the UMTS Forum or as "an environment, which presents the subscriber with a common look and feel interface and service experience regardless of location, network and terminal type" as defined by Eurescom P920-GI. In other words, the VHE is based on standardized service capabilities and personalized features that are consistently presented so that the user always "feels" that he is on his home network even when roaming across network boundaries.

In said Virtualized Home Environment, in the VHE setup, the home gateway (CPE) operates at Layer 2 (i.e. Ethernet) instead of Layer 3 (i.e. IP). As layer-2 home gateways are not expected to implement basic network services (essential for any usual communication session) like address assignment (DHCP) or name resolution (DNS), these services are provided in virtualized servers running at the network operator premises (in the cloud network).

In other words, in a VHE, the Customer Premises Equipment (CPE) that will be deployed, supports only OSI (OPEN Systems Interconnection) Layer 2 services. Essential network services like (DNS; DHCP) are currently implemented in the Layer-3. So the layer-2 home gateways used in VHE are not expected to implement said basic network services and said service needs therefore to be moved to a cloud environment (i.e a data-centre) connected to the access network. However, current cloud deployments are usually not collocated with the access network, therefore, they are still accessed using Layer 3 connections. Current interconnection schemes between the access network and cloud environments for exchanging other than Layer 3 packets require configuration on a subscriber-per-subscriber basis. This makes it difficult to provide the required connections on demand, as needed by the virtualized home environment. Response times required by network services would not be met by current layer 2 solutions and this makes a migration to L2 CPEs (and therefore a migration to VHE) not viable.

So, as stated before, to deploy some new technologies (as VHE), it is necessary to establish Layer-2 connectivity over a Layer 3 network. In order to do that, there are a number of alternatives available:

Tunneling is the process of encapsulating an entire packet within another packet and sending it over a network. This technique is used to allow different communication channels to share a communication path while keeping them isolated. Tunneling requires mainly three different protocols:
- Passenger protocol: The original data that is carried.
- Encapsulating protocol: The protocol that is wrapped around the original data.
- Carrier protocol: The protocol used by the network over which the information is travelling.

Currently used encapsulating protocols include:

*PPP:* The *Point-to-Point Protocol* (PPP) provides a standard method for transporting multi-protocol datagrams over point-to-point links. PPP is comprised of three main components:
✔ A method for encapsulating multi-protocol datagrams.
✔ A Link Control Protocol (LCP) for establishing, configuring, and testing the data-link connection.
✔ A family of Network Control Protocols (NCPs) for establishing and configuring different network-layer protocols.

This protocol was published in July 1994 (RFC 1661) with category of standard track. (Point-to-Point Tunneling Protocol - extends the Point to Point Protocol (PPP) standard for traditional dial-up networking).

*Layer 2 Tunnelling Protocol, L2TP*: This is a tunnelling protocol used to support virtual private networks (VPNs) or as part of the delivery of services by ISPs. L2TP facilitates the tunnelling of PPP packets across an intervening network in a way that is as transparent as possible to both end-subscribers and applications. It was published in 1999 as proposed standard RFC 2661.

*Cisco Layer Two Forwarding* (Protocol) "L2F": It permits the tunnelling of the link layer (i.e., HDLC, async HDLC, or SLIP frames) of higher-level protocols. Using such tunnels, it is possible to divorce the location of the initial dialup server from the location at which the dial-up protocol connection is terminated and access to the network provided. It was published in 1998 with a historic category RFC2341. *Virtual Private LAN Service* (VPLS): A VPLS creates an emulated LAN segment for a given set of users; i.e., it creates a Layer 2 broadcast domain that is fully capable of learning and forwarding on Ethernet MAC addresses and that is closed to a given set of users. It was published in 2007 with category Standards Track RF4762.

Transparent Interconnection of Lots of Links (TRILL) is an Internet Engineering Task Force (IETF) protocol standard that uses Layer 3 routing techniques to create a large cloud of links that appear to IP nodes to be a single IP subnet. It glues links together so that IP nodes see the cloud as a single link.

All these tunneling techniques require configuration on a subscriber-per-subscriber basis; making, as explained before, it difficult to provide the required connection on demand, as needed by environments as the virtualized home environment. Moreover, the above-mentioned alternatives for establishment of Layer-2 connectivity do not have the level of self-configuration achieved by the proposed invention.

Virtual Private Line Service (VPLS) provides a system to establish Layer2 connections using tunnels or through an Multi-Protocol Label Switching (MPLS) network. One of the prior art VPLS solution proposes to use Border Gateway Protocol-4 (BGP-4) to signal the establishment of Layer-2 connectivity between border nodes in a single Autonomous System (AS) scenario. Multi-AS scenarios are covered but the use of BGP-4 imposes a complex interconnection scheme. Transparent Interconnection of Lots of Links (TRILL) is another proposal for organizing Layer-2 connectivity. It allows carrying isolated virtual Local Area Networks (LANs), but its main objective is to describe the mechanisms to interconnect nodes and avoid loops in a network of TRILL-enabled nodes.

Generic Routing Encapsulation (GRE) provides the possibility of carrying isolated traffic in multiple sub-tunnels over a common carrier tunnel in cases where compaction and securitization arte required for interconnection. However, there is no way for a tunnel endpoint to signal the other endpoint when a new sub-tunnel is established. This needs to be configured on both endpoint devices. Neither is there a way to identify whether either endpoint of a sub-tunnel is active. By default, once the key identifying a sub-tunnel is considered valid for an endpoint, this endpoint will start sending traffic assigned to the sub-tunnel. Traffic will cease to flow over a sub-tunnel when the sub-tunnel is deleted on both ends by the network management systems or if the whole carrier tunnel is deactivated (e.g. by a failure).

Additionally, the management of the Cloud Infrastructure and the Access Network are completely orthogonal problems nowadays. Both are managed independently and there is no interaction between their management systems. This implies a duplication of information in the management systems of the Access Network and the Cloud Environment, which makes the risk of inconsistencies between both managements system high.

The embodiments of the invention proposed below will overcome at least some of these drawbacks.

### SUMMARY

The problems found in prior art techniques are generally solved or circumvented, and technical advantages are generally achieved by the disclosed embodiments which provide a method and system for automatic interconnection of a cloud infrastructure with an access network for a home network environment which supports layer 2 connectivity (e.g. a Virtualized home network environment).

The access network having a gateway (e.g. a BRAS node) connecting the virtualized home network with an external cloud server that provides one or more network services by servers (e.g Virtual Machines (VMs)) to the home network (e.g. a VHE). There will be an access point, called cloud access point, which is a front end that connects the cloud server to the home environment using Layer-2 connectivity.

In the proposed invention, a unique subscriber identification that is valid for the access network and the cloud environment will be used and a sub-tunnel will be created by the gateway, initially set to an inactive state. A process to activate this sub-tunnel that will be performed by the cloud server front-end based on the subscriber identification (SUBSCRIBER_ID) once virtual network services are available for said subscriber.

In a first aspect a method is provided for providing access to a service hosted in a cloud network to a subscriber in a home network, the home network being connected via a Communication Premises Equipment, CPE, to an access network using a OSI layer 2 connection, the method comprising:
a) An access server of the access network receiving a request of activation of a communications session from the subscriber, the request including a first identification of the subscriber.
b) When receiving said request, the access server sending a message to a second node of the access network to authenticate the subscriber and the access server receiving from the second node, the result of said authentication.
c) If the authentication is successful, the access server creating a layer 2 sub-tunnel for said subscriber, in a pre-provisioned layer 2 carrier tunnel between the access server of the access network and an access node of the cloud network
d) A node in the cloud network receiving a request message to activate the service for the subscriber, said request message including the first identification of the subscriber.
e) When receiving the request message, the node in the cloud network activating the server in the cloud network providing said service and creating a layer 2 connection between said server and the access node of the cloud network
f) When said layer 2 connection is created, the access node of the cloud network sending a message to the access server of the access network to activate the sub-tunnel for said subscriber
g) When the access server receives the message to activate the sub-tunnel for said subscriber, the access server activating said sub-tunnel and once the sub-tunnel is activated, the access server sending to the access node of the cloud network, using said sub-tunnel, the packets of said service received from said subscriber using said sub-tunnel and receiving from the access node of the cloud network the packets of said service to said subscriber using said sub-tunnel.

In an embodiment said home network is a virtualized home network or any other type of home network whose CPE is connected to the access network via a OSI layer 2 connection.

Said service may be a virtualized network service and the server providing said service in the cloud network is a virtual machine, the access server of the access network may be a Broadband Remote Access Server, BRAS, and the second node of the access network may be an Authentication, Authorization and Accounting system node of the access network.

The service may be a basic network service as address assignment, DHCP, service, a name resolution, DNS, service or an added value service as a video on demand service, and audio service, an A/V service, a network security service, an storage service or any other types of added value services.

In an embodiment, the request message to activate the service in step d) is sent by a node of the access network to the node in the cloud network when the subscriber request the session activation and in an alternative embodiment the request message to activate the service in step d) is sent by the second node of the access network when it receives the authentication request from the access server of the access network.

In an embodiment, in step c), when creating said sub-tunnel, the state of the tunnel is set to down and the access server do not send any layer 2 data through it until it receives a message from the access node of the cloud network to activate the sub-tunnel for said subscriber

In an embodiment, step d) further includes: when receiving the request message to activate the service for the subscriber, the node of the cloud network sending a message to the second node of the access network in order to authenticate the subscriber and/or to get service parameters of the subscriber, said message including the first identification of the subscriber. In an embodiment, the authentication process also include to check if the user is authorized to activate said service and if not, the authentication process is not successful

In an embodiment, step d) further includes: when receiving the request message to activate the service for the user, the node of the cloud network contacting the second node of the access network in order to check if the user whose user identification is included in the request message is authorized for said service, and only if said checking is successful, the node performs the action of step e)

The access node of the cloud network may be an edge router of the cloud network and the node in the cloud network receiving a request message to activate the service for the subscriber may be a cloud management server node.

In an embodiment, the message sent from the access node of the cloud network to the access server of the access network in step f) includes the first identification of the subscriber.

In another aspect, a server in an access network is presented, the server comprising:
- means for receiving a request of activation of a communications session from an subscriber in a home network, the request including a first identification of the subscriber;
- means for, when receiving said request, sending a message to a second node of the access network to authenticate the subscriber;
- means for receiving from the second node, the result of said authentication
- means for, if the authentication is successful, the access server creating a layer 2 sub-tunnel for said subscriber and for said requested service, in a pre-provisioned layer 2 carrier tunnel between the access server of the access network and an access node of the cloud network
- means for, once it receives a message from the access node of the cloud network to activate the sub-tunnel, the access server sending to the access node of the cloud network, using said sub-tunnel, the packets of said service received from said subscriber and receiving from the access node of the cloud network the packets of said service to said subscriber using said sub-tunnel.

In another aspect, a system is provided for providing access to a service hosted in a cloud network to a subscriber of a home network, the home network being connected via a Communication Premises Equipment, CPE, to an access network using a OSI layer 2 connection, the system comprising:
- An access server of the access network comprising:
   - means for receiving a request of activation of a communications session from the subscriber, the request including a first identification of the subscriber;
   - means for, when receiving said request, sending a message to a second node of the access network to authenticate the subscriber;
   - means for receiving from the second node, the result of said authentication;
   - means for, if the authentication is successful, the access server creating a layer 2 sub-tunnel for said subscriber and for said requested service, in a pre-provisioned layer 2 carrier tunnel between the access server of the access network and an access node of the cloud network
- A node of the cloud network comprising:
   - means for receiving a request message to activate the service for the subscriber, said request message including the first identification of the subscriber.
   - means for when receiving the request message, the node in the cloud network activating the server in the cloud network providing said service and creating a layer 2 connection between said server and the access node of the cloud network
   - An access node of the cloud network comprising means for when said layer 2 connection is created, sending a message to the access server of the access network to activate the sub-tunnel for said subscriber
   - The access server further comprising means for, when it receives the message from the access node of the cloud network, the access server sending to the access node of the cloud network, using said sub-tunnel, the packets of said service received from said subscriber and receiving from the access node of the cloud network the packets of said service to said subscriber using said sub-tunnel.

Finally, a computer program comprising computer program code means adapted to perform the above-described method is presented.

Consequently, according to the invention, a method, system and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method and device are now described, by way of example only, and with reference to the accompanying drawings, in which:
Figure 1 shows a block diagram of the Layer 3 connectivity between the access network and the cloud environment according to a prior art embodiment.
Figure 2 shows a block diagram of the connectivity between the access network and the cloud environment according for the virtual CPE environment according to an embodiment of the present invention.
Figure 3 shows a functional block diagram of an activation of a subscriber in the access network in a deployment scenario according to one embodiment of the present invention.
Figure 4 shows a functional block diagram of an activation of a network service for a subscriber in the access network in a deployment scenario according to one embodiment of the present invention.
Figure 5 shows a block diagram of an L2TV system architecture according to one embodiment of the present invention.
Figure 6 shows a schematic diagram of L2TV communication events according to one embodiment of the present invention.

### DESCRIPTION OF EMBODIMENTS

The present embodiments may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The invention proposed herein tackles the prior art problems by providing an alternative way of interconnecting the resources assigned to a subscriber in the access network and in the cloud environment on demand.

In the simplest scenario, the subscriber's home network may be a single end device (a PC or a set top box...) which access services through a CPE. However, as stated before, in a home network, the subscriber may have different end devices (e.g. a TV set top box, a mobile phone, a PC) which access different subscribed services through a single CPE.

Hence, all these devices will use the same connection between the CPE and the BRAS (in a virtualized home network said connection will be a layer 2 connection). So, even there may be different end devices with, maybe, different persons (for example, members of the same family) using them (under the same subscription); from the access network point of view, all said end devices are transparent, as the access network only "sees" and communicates with one device, the CPE. In the access network databases said CPE will be associated to the subscriber's profile which uses said CPE.

Hence, from the access network point of view, the whole home network is seen as a single node with a certain ID. Said ID can be, for example, the identifier of the CPE or for example, the telephone number of the line that the CPE is connected to (usually the identifier of the CPE and the telephone number are associated) or any other type of parameter which univocally identifies the CPE in the access network. Said ID may be the subscriber ID used by the access network to identify the subscriber profile (to authenticate the subscriber, to indicate the services which said subscriber supports or is subscribed...).

Generally speaking, said cloud environment may be an external network (or a group of external networks), which gives access to network nodes (these nodes belonging to said external network or to different networks connected with said external network) that provide network services demanded by the user of the home network or it may be a server or group of servers that executes applications in isolated virtual environments to provide network services to the user of the home network, in such a way that different home networks remain isolated from one another.

The proposed solution interconnects the access network and the cloud environment using a specific connection, keeping individual subscriber's isolated from other subscribers.

In an embodiment, individual subscriber connections are established on-demand and with no external interaction on a common carrier communication channel.

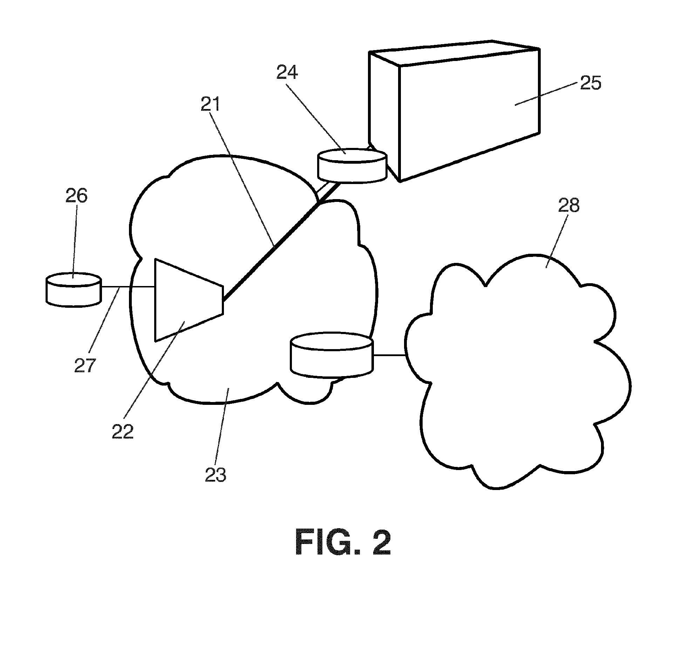

In one embodiment, this connectivity happens in the logical link that is highlighted in Figure 2 (21), between the access server (e.g. a BRAS) (22) in the access network (23) and the Cloud Access Point (24) in the cloud environment (25).

In this scenario the connection (27) between the CPE (26) of the home network and the access server is a layer 2 connection. And the connection between the access network and the cloud environment is not via internet (28) but, as it will be later explained, via an specific connection established for said subscriber.

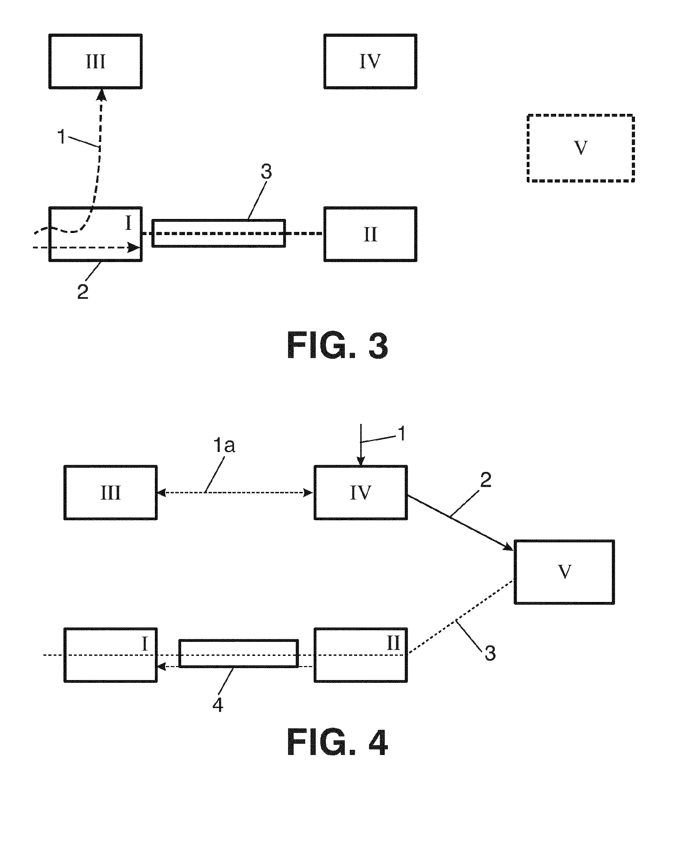

Figure 3 shows the subsystems involved in the deployment scenario. Box I represents the proposed BRAS adapted to this scenario, the virtualized home network environment, Box II represents the tunnel termination device (cloud access point) in the Cloud environment. Box III represents the Authentication, Authorization, and Accounting (AAA) system of the access network and Box IV represents the Cloud Environment Management System. Box V represents one or more virtualized environments in the Cloud Environment that implement and offer any services for a subscriber.

In figure 3, the first step of the process is shown. The BRAS and the Cloud Access Point have a unique, pre-provisioned carrier tunnel (with pre-provisioned, it is meant for example, that the tunnel is established and/or that the features and information of said connection have been previously defined and provisioned in the BRAS and the Cloud Access Point; during said preprovisioning there is no need to include specific information regarding the subscribers whose traffic will be carried later by this tunnel).

One of the advantages of the proposed invention is that the subscriber (identified by its subscriber identity - SUBSCRIBER_ID -) is only provisioned in the access network's AAA system and it is not necessary (as it happens in prior art solutions) to provision said subscriber in the BRAS or the Cloud network. This process represented by dotted arrow 1. This allows the subscriber to activate the service faster, when he or she connects to the access network.

When the BRAS receives a session activation request from the home network's CPE, the subscriber is authenticated to the AAA (dotted line 1, said message includes a subscriber identification subscriber_ID). During said process the BRAS not only receives the result of the authentication but other Authorization and Accounting information of the subscriber, that is typically stored in the AAA (for example, the services allowed for said subscriber, the service contracted by said subscriber, subscriber profile...). More over the authentication process can include a checking of the authorizations of the subscriber and if, for example, the subscriber is not authorized to start a session (e.g., because he has not paid the fees) the authentication process send back a "non allowed" result and the session is not activated.

In an embodiment, the session between the home's CPE and the BRAS is a PPP (point to point protocol) session, but other types of communications sessions are allowed.

If the authentication is successful, the subscriber session is activated in the BRAS (dotted line 2) and the BRAS creates (establishes) a sub-tunnel for said subscriber in the Carrier Tunnel between the BRAS and the Cloud's tunnel termination device (dotted line 3). The state of this sub-tunnel is initially set to down and the BRAS will not try to send packets through it.

As stated before, in these types of home networks, the basic network services like address assignment (DHCP) or name resolution (DNS) are no longer supported by the CPE but, instead, provided by servers in the cloud network. In order to do that, when a session activation request is received, a node of the access network indicates said activation to the Cloud Management System, sending a message to the Cloud Management System including the subscriber_ID and said basic network services will be activated by the Cloud Management System (as it will be explained later). This message can be sent, for example, by the AAA when it receives the authentication request from the BRAS (because the subscriber wants to activate a session).

In other words, when a subscriber wants to activate a session the Cloud Management system will receive a message to activate said basic services.

Other services (for example, added value services), to which the subscriber actively register himself, hosted in the Cloud Environment (for example, A/V services, network security services, storage, etc.) might not be automatically activated when starting a session, but rather when the subscriber is authorized by the service provider of said service.

To activate said services the cloud management system will receive a request to activate a certain added value service for a subscriber (said request includes the subscriber identification subscriber_ID). Said request can be sent to the cloud management system by the service provider when, for example, the subscribers subscribes to (pays) said service or when for any reason, the service is available for said subscriber. Said request could be sent for example, from the service provider that provides said added value service.

For activating a service (a basic service or an added value services) in the proposed system, the following steps will be performed (shown in figure 4):
1. The procedure is initiated by (arrow 1) the cloud management system receiving a request to activate a certain added value service for a subscriber (said request includes the subscriber identification subscriber_ID). As stated before, said request can be for basic services (in this case, the request will be received from the access network, from the AAA, when a subscriber session is activated) or for added value services (from a service provider, when said service is available to the subscriber).
2. The Cloud Management System may interact with the Access Networks AAA (dotted arrow 1 a) in order to get service parameters from the access network AAA using the SUBSCRIBER_ID. If needed, the Cloud Management System can even request to the AAA an authentication of the subscriber (and it is not successful, the process is ended). Typically, for added value services, the Cloud Management System will check with the information obtained from the AAA, if the subscriber supports (and is authorized to) said services and if not, the process is ended. For basic services, this is not necessary.
3. With the service parameters from the access network AAA, the cloud environment sets up the services for a subscriber. That is, the Cloud Management System activates one or more virtual machines (arrow 2 in Figure 4) that provide said services and creates a Layer-2 connectivity (dotted line 3) between the virtual machine or machines and the Cloud Access Point. This connectivity is provided on a per-subscriber basis and is logically isolated from connections established for other subscribers in the Cloud Environment.
4. Then the Cloud Access point (box II) signals the BRAS to activate the subscriber sub-tunnel (4 in Figure 4) and the BRAS activates it. Once the connectivity is established, the home network has Layer-2 access to the activated services. Traffic originated at the CPE for said service will be sent by the BRAS to the cloud network using said sub-tunnel, traffic directed to the CPE will be sent by the cloud access point to the BRAS using said sub-tunnel.

It may be happen, that the sub-tunnel is activated (because a first service has been activated) and the BRAS sent through the sub-tunnel traffic for another service non-activated. Said traffic for a non-activated service will be lost in the cloud network as the connections for said subscriber to the virtual machines providing said service (3), are not activated.

The activation of more network services, once the home network has access to the cloud environment, requires all steps mentioned above that create a new virtual environment implementing the virtualised network service and then connect this virtual environment to the subscriber's isolated Layer-2 connectivity in the Cloud Environment. There will be one sub-tunnel per subscriber, so if more than one service is activated for a subscriber, all the services provided this subscriber will use the same sub-tunnel established between the BRAS and the cloud access point for said subscriber.

Some of the components shown in figure 3 and 4, could be implemented using well known prior art solutions:
- Box III: **Access Network AAA,** It can be implemented with an AAA system that supports the Radius o Diameter protocols
- Box V: **Virtualised Network Services,** can be implemented on any Service virtualisation platform, like Xen, VMware, etc.

In order to implement the functionality proposed in the present invention, following components would need to be enhanced:
- Box I: **Broadband Remote Access Server, BRAS:** Instead of a virtual Layer-3 switching instance, the BRAS would need to implement an enhanced Layer-2 switching function that :
   1. Activates layer-2 forwarding through the sub-tunnel once the Cloud environment instructs it to do so.
   2. For traffic directed to Internet, it provides a default Layer-2 gateway (layer-2 or layer 3? For internet would not be layer 3?) which forwards said traffic to the internet network via an internet access node (29 in figure 2).
- Box II: **Cloud Access Point:** In addition to providing Layer-2 connectivity between the virtual Layer-2 switching function in the BRAS and the Virtualised Network Services, the Cloud Access Point also will have to signal the BRAS when an subscriber sub-tunnel activation is necessary.
- Box IV: **Cloud Management Server:** The Cloud Management Server provides the functions to control the creation and destruction of Virtual Machines implementing the network services and the connectivity between said network services and the Cloud Access Point. In addition, this element needs to implement the communications with the Access Network AAA in order to guarantee that operations requested comply to the Services contracted by the Customer.

Based on this services virtualization orientation two typical embodiment cases can be shown as examples. On both embodiments the use of the procedure would optimize the connection:
- The first one is described as a L2TV environment (IPTv services) for delivering subscription Web-TV service or video on demand or TV live, on which the quality of the service should be optimized on each one of the associated end devices (set top box, screen device).
- The second one is described when there is a dynamically changing customer profile that accesses different pools of services (data storage services, shared space...). Each pool is working on a different cloud environment. Services may be grouped in different cloud environments by criteria like common protocols, common data sources, etc (for example, Video on Demand services will be provided in a cloud environment with a data center connected to the video head with the video resources, the storage services will be provided in a cloud environment with enough storage resources...).

### L2Tv system embodiment

L2TV systems are the combination of equipment, protocols and transmission lines that are used to provide television communication services over networks. The system options include network operator, shared network operator and virtual (hosted) system operation.

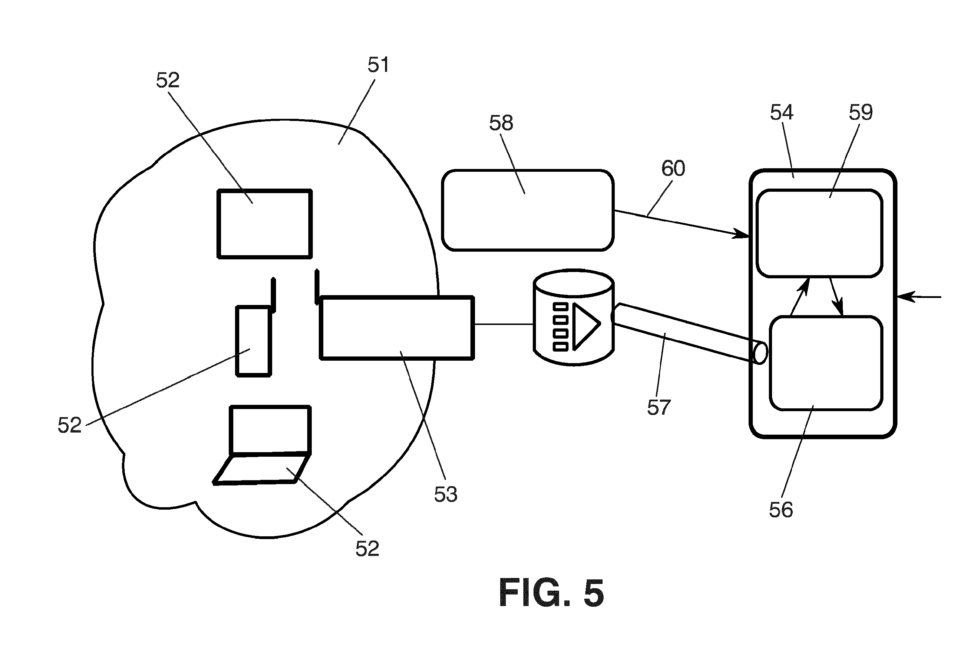

Into figure 5, a basic architecture network for such system is shown. In the virtualized home network (customer site) (51), different end devices (52) (e.g. a TV set top box, a mobile phone, a PC) access different services (life TV, Video on Demand...) in the cloud environment (54) through a Layer 2 CPE (53). The CPE is connected to the BRAS (55), which is connected via a sub-tunnel of a pre-provisioned tunnel (57) with the cloud access point (56). Although the technology traditionally used in this type of system is based on IP, in a virtualized environment would use Layer 2.

A subscriber (identified by its subscriber identity - SUBSCRIBER_ID -related with the customer site) of an end device is provisioned in the access network's AAA system (58). Until the cloud management system (59) does not receive a message saying that the service ( Provided by content sources as Life TV, Internet Video, Vod)is available for said subscriber and it checks (60) with the AAA that the subscriber is authentic and authorized for (and supporting) said service, no request for final customer service would progress to the point of service access, as the tunnel connection is not enabled.

Once the access is enabled, the end device can activate the service, connecting via the CPE connects to the access network's BRAS, which creates a sub-tunnel in the Carrier Tunnel between the BRAS and the Cloud's tunnel termination device. The state of this tunnel is initially set to down and the BRAS will not try to send packets through it.

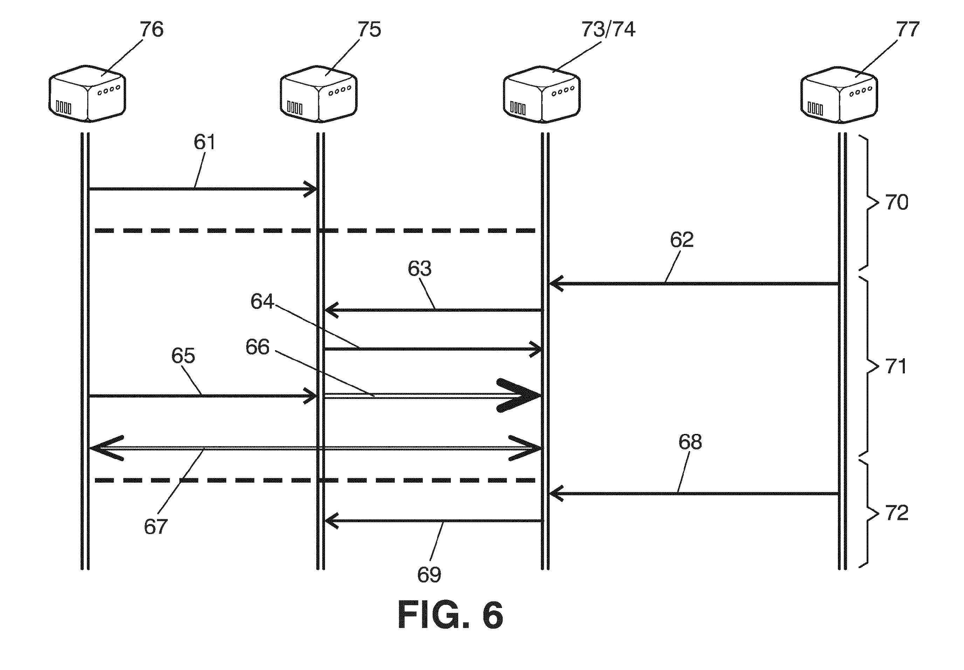

When the services are set down by unsubscribe or service completion, the tunnel between BRAS and Cloud Access Point is released. Figure 6 shows the entire communication events.

At the beginning the sub-tunnel has not been activated (70) by the cloud management system, so even if the subscriber asks for the service to the access server of the access network (e.g. the BRAS) (61), the service is not provided.

Then the cloud management system (77) activates the service for said subscriber (71). As stated before, it activates the virtual machine or server which provides the service (62) and creates a layer 2 connection between the cloud access point (73) and the virtual machine (74) providing the service.

Then the cloud access point indicates the BRAS (75) to activate the sub-tunnel (63), the access server activates the tunnel and sends a confirmation message to the cloud access point (64).

After this activation when the subscriber (76) asks for said service (65), said request is forwarded to the virtual machines through the sub-tunnel (66) and the service is provided (data for/to the services is sent) using the layer 2 sub-tunnel established (67).

When for any reason, the system is disabled for the subscriber (72), the cloud management system informs the cloud access point (68) and it sends a message to the BRAS to disconnect the tunnel (69)

### Dynamically changing customer profile in a pool of services.

In this embodiment a pool of services are accessible to a subscriber who can change dynamically depending on that he needs instantly. Said pools of services can be provided by services in different cloud environments. This can need a dynamic change or adjustment of the tunnel end point or a provisioning for different tunnel for the same SUBSCRIBER_ID (between the BRAS and the cloud access points of the different cloud networks). The basic architecture network for such system, need to change slightly, because there can be several physical tunnel to be create, one for each different cloud involved.

Each cloud environment will have a cloud access point and a cloud management system (which will communicate with the AAA system). The steps of the method will the same as explained before for a single cloud, only that the BRAS should select a different tunnel depending on the cloud network involved

With respect to communication events related, there are two fundamental changes:
✔ Independently of the services the subscriber has subscribed, the BRAS has to enable carrier tunnels to all provider service pools. Of course, sub-tunnels will only be activated for the services actually subscribed by the subscriber.
✔ Depending to the subscriber ID (and above all, on the subscriber subscription), the BRAS must dynamically control each of the interconnections with the different clouds, every time. Summarizing, the connectivity method and system would involve the following advantages compared with the current prior art solutions:

Currently, the Access Network and the Cloud Environment are two completely independent systems. Their integration is cumbersome and error-prone. With the proposed invention both would have a common point of entry for provisioning and activating services, reducing the number of operations that need to be performed both for activating and deactivating services, thereby reducing the risk of misconfiguration and the time to deploy a service for a subscriber. This will imply a higher efficiency of the network.

Additionally, the use of virtualized environments for implementing network services allows the operator to move from specialized network equipment that is deployed for a specific purpose to an environment where Commercial off-the-shelf (COTS) equipment is deployed and the network services become a SW functionality. In such an environment, migrating a specific network service implies a SW component. So, when a specific network service becomes obsolete, the SW component(s) implementing it are deactivated and the deployed equipment can be reused to implement other network services.

The benefits of deploying a Layer-2 Customer Premises Equipment (CPE) in the residential market and having a virtualized home network environment in the provider network are manifold: the CPE is a simple device with better Mean Time between Failures (MTBF) characteristics, currently deployed residential routers can be reused, etc. Additionally, the service provider gets privileged access to the home network and can offer virtualized network services. Virtualization offers the advantage of lower development cycles and drastically reduced service deployment costs.

The services providers demand an infrastructure which has the ability to deliver new applications at the speed in which to be responsive to market dynamics while creating competitive differentiation. To address these industry requirements, efficient network virtualization technologies and services have to be offered (as the one proposed in the present invention). Network virtualization represents a new paradigm, which challenges existing assumptions and deployment models. In such an environment, new services can be offered. Network based multimedia services can be offered to end subscribers without the need to deploy additional boxes in the end-subscriber home. This implies a significant reduction of operational costs. Additionally, network security services like virus or Distributed Denial of Service (DDoS) attack prevention can be offered. Most of these services can be offered from a traditional Cloud environment.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for providing access to a service hosted in a cloud network to a subscriber in a home network, the home network being connected via a Communication Premises Equipment, CPE, to an access network using a OSI layer 2 connection, the method comprising:
a) An access server of the access network receiving a request of activation of a communications session from the subscriber, the request including a first identification of the subscriber.
b) When receiving said request, the access server sending a message to a second node of the access network to authenticate the subscriber and the access server receiving from the second node, the result of said authentication.
c) If the authentication is successful, the access server creating a layer 2 sub-tunnel for said subscriber, in a pre-provisioned layer 2 carrier tunnel between the access server of the access network and an access node of the cloud network
d) A node in the cloud network receiving a request message to activate the service for the subscriber, said request message including the first identification of the subscriber.
e) When receiving the request message, the node in the cloud network activating the server in the cloud network providing said service and creating a layer 2 connection between said server and the access node of the cloud network
f) When said layer 2 connection is created, the access node of the cloud network sending a message to the access server of the access network to activate the sub-tunnel for said subscriber
g) When the access server receives the message to activate the sub-tunnel for said subscriber, the access server activating said sub-tunnel and once the sub-tunnel is activated, the access server sending to the access node of the cloud network, using said sub-tunnel, the packets of said service received from said subscriber using said sub-tunnel and receiving from the access node of the cloud network the packets of said service to said subscriber using said sub-tunnel.

2. A method according to any of the previous claims where the home network is a virtualized home network.

3. A method according to any of the previous claims where the service is a virtualized network service and the server providing said service in the cloud network is a virtual machine.

4. A method according to any of the previous claims where the access server of the access network is a Broadband Remote Access Server, BRAS

5. A method according to any of the previous claims where the second node of the access network is an Authentication, Authorization and Accounting system node of the access network.

6. A method according to any of the previous claims where the service is an address assignment, DHCP, service, a name resolution, DNS, service or any other types of basic services.

7. A method according to claims 1-6 where the service is a video on demand service, and audio service, an A/V service, a network security service, an storage service or any other types of added value services.

8. A method according to any of the previous claims where the request message to activate the service in step d) is sent by a node of the access network to the node in the cloud network when the subscriber request the session activation.

9. A method according to any of the previous claims where the request message to activate the service in step d) is sent by the second node of the access network when it receives the authentication request from the access server of the access network.

10. A method according to any of the previous claims where in step c), when creating said sub-tunnel, the state of the tunnel is set to down and the access server do not send any layer 2 data through it until it receives a message from the access node of the cloud network to activate the sub-tunnel for said subscriber

11. A method according to any of the previous claims where step d) further includes: when receiving the request message to activate the service for the subscriber, the node of the cloud network sending a message to the second node of the access network in order to authenticate the subscriber and/or to get service parameters of the subscriber, said message including the first identification of the subscriber

12. A method according to any of the previous claims where the node in the cloud network is a cloud management server node.

13. An access server in an access network comprising:
- means for receiving a request of activation of a communications session from an subscriber of a home network, the request including a first identification of the subscriber;
- means for, when receiving said request, sending a message to a second node of the access network to authenticate the subscriber;
- means for receiving from the second node, the result of said authentication
- means for, if the authentication is successful, the access server creating a layer 2 sub-tunnel for said subscriber and for said requested service, in a pre-provisioned layer 2 carrier tunnel between the access server of the access network and an access node of the cloud network
- means for, once it receives a message from the access node of the cloud network to activate the sub-tunnel, the access server sending to the access node of the cloud network, using said sub-tunnel, the packets of said service received from said subscriber and receiving from the access node of the cloud network the packets of said service to said subscriber using said sub-tunnel.

14. A system for providing access to a service hosted in a cloud network to a subscriber of a home network, the home network being connected via a Communication Premises Equipment, CPE, to an access network using a OSI layer 2 connection, the system comprising:
- An access server of the access network comprising:
- means for receiving a request of activation of a communications session from the subscriber, the request including a first identification of the subscriber;
- means for, when receiving said request, sending a message to a second node of the access network to authenticate the subscriber;
- means for receiving from the second node, the result of said authentication;
- means for, if the authentication is successful, the access server creating a layer 2 sub-tunnel for said subscriber and for said requested service, in a pre-provisioned layer 2 carrier tunnel between the access server of the access network and an access node of the cloud network
- A node of the cloud network comprising:
- means for receiving a request message to activate the service for the subscriber, said request message including the first identification of the subscriber.
- means for when receiving the request message, the node in the cloud network activating the server in the cloud network providing said service and creating a layer 2 connection between said server and the access node of the cloud network
- An access node of the cloud network comprising means for when said layer 2 connection is created, sending a message to the access server of the access network to activate the sub-tunnel for said subscriber
- The access server further comprising means for, when it receives the message from the access node of the cloud network, the access server sending to the access node of the cloud network, using said sub-tunnel, the packets of said service received from said subscriber and receiving from the access node of the cloud network the packets of said service to said subscriber using said sub-tunnel.

15. A computer program product comprising computer-executable instructions for performing the method according to any of the claims 1-12, when the program is run on a computer.
